# EUROPÄISCHE PATENTSCHRIFT

(11) **EP 1 116 313 B1**
(45) Veröffentlichungstag und Bekanntmachung des Hinweises auf die Patenterteilung: **29.10.2003**
(21) Anmeldenummer: 99955725.9
(22) Anmeldetag: 14.09.1999
(51) Int. Cl.: H02H 7/085

(54) **VERFAHREN UND ANORDNUNG ZUR ELEKTRISCHEN STEUERUNG UND REGELUNG DER BEWEGUNG EINES ELEKTRISCH BETRIEBENEN AGGREGATS EINES KRAFTFAHRZEUGS**
METHOD AND ARRANGEMENT FOR ELECTRICALLY CONTROLLING AND REGULATING THE MOVEMENT OF AN ELECTRICALLY OPERATED AGGREGATE OF A MOTOR VEHICLE
PROCEDE ET DISPOSITIF DE COMMANDE ET DE REGULATION ELECTRIQUE DU MOUVEMENT D'UN ENSEMBLE A COMMANDE ELECTRIQUE D'UN VEHICULE

(30) Priorität: 22.09.1998 DE 19845768
(43) Veröffentlichungstag der Anmeldung: 18.07.2001
(73) Patentinhaber: Brose Fahrzeugteile GmbH & Co. KG Coburg, 96450 Coburg (DE)
(72) Erfinder: ÜBELEIN, Jörg, D-96271 Grub am Forst (DE); RICHTER, Stefan, D-96247 Michelau (DE); MÖNCH, Henning, D-96450 Coburg (DE)
(74) Vertreter: Müller, Wolfram Hubertus, Dipl.-Phys.
(86) Internationale Anmeldenummer: DE9902972
(87) Internationale Veröffentlichungsnummer: WO00017982

(56) Entgegenhaltungen:
- WO-A-98/40945
- DE-A- 4 020 351

## Beschreibung

Die Erfindung betrifft ein Verfahren zur elektrischen Steuerung und Regelung der Bewegung eines elektrisch betriebenen Aggregats eines Kraftfahrzeugs, insbesondere eines Fensterhebers oder Schiebedachs, nach dem Oberbegriff des Anspruchs 1 und eine Anordnung zur Durchführung des Verfahrens.

Aus der DE 33 03 590 C2 ist ein Verfahren zur elektrischen Betätigung und Überwachung des Öffnungs- und Schließzyklus eines elektrisch betätigbaren Fensterhebers bekannt, bei dem ein Kollisionszustand indirekt aufgrund einer plötzlich absinkenden Verstellgeschwindigkeit des Fensterhebers erkannt wird. Als Korrelationsgröße für die aktuelle Verstellkraft des Aggregats wird der elektrische Strom, das Drehmoment oder die Periodendauer des Antriebsmotors des Aggregats gemessen. Sobald die Verstellkraft einen maximal zulässigen Grenzwert überschreitet, geht eine zugeordnete Steuer- und Regelelektronik von einem Kollisionszustand aus und veranlaßt ein Abschalten oder Reversieren der Antriebsbewegung des Fensterhebers.

Die DE 40 20 351 A1 beschreibt ein Verfahren zur elektronischen Überwachung des Öffnungs- und Schließzyklus eines elektrisch betätigbaren Aggregats, bei dem ein unbegründetes, durch das Einwirken von Beschleunigungskräften auf die Fahrzeugkarosserie verursachtes Reversieren der Bewegung des Stellorgans des Aggregats durch ein zusätzliches Sensorelement verhindert wird, das einwirkende Beschleunigungskräfte erfaßt und entsprechende Signale an eine Steuer- und Regelelektronik führt.

Zur Berücksichtigung von auf die Fahrzeugkarosserie wirkenden Beschleunigungskräften, insbesondere zur Berücksichtigung der bei Befahren einer Schlechtwegstrecke auftretenden vertikalen Beschleunigungskräfte, ist es des weiteren bekannt, eine zeitliche Filterung der erfaßten Korrelationsgröße für die Verstellkraft des Aggregats (etwa der Drehzahl oder dem Drehmoment des Antriebsmotors) vorzunehmen. Dies erfolgt durch Schlechtwegstreckensensoren, die die erfaßte Korrelationsgröße über einen bestimmten Zeitraum, in der Regel etwa 30 Millisekunden, betrachten. Bei Vorliegen einer Schlechtwegstrecke schwankt das erfaßte Signal um einen Mittelwert und steigt nicht dauerhaft an wie im Einklemmfall. Aus der Betrachtung des Signals über einen bestimmten Zeitraum kann daher geschlossen werden, ob lediglich eine Schlechtwegstrecke vorliegt oder aber ein Einklemmfall.

Nachteilig an diesem Verfahren ist, daß aufgrund der Notwendigkeit, das erfaßte Signal über einen bestimmten Zeitraum zu betrachten, im Einklemmfall ein Reversieren der Verstellbewegung des Stellorgans des Aggregats mit einer zeitlichen Verzögerung erfolgt. Dies macht es unmöglich, die strengen sicherheitstechnischen Anforderungen der USA zur Sicherheit von Kraftfahrzeugfensterhebereinrichtungen einzuhalten.

Schließlich ist es aus der WO 97/39509 bekannt, zur elektronischen Überwachung eines in einem Fahrzeug angeordneten Verstellantriebs in einer Anordnung zur Bereitstellung wenigstens eines Grenzwertes einer Schließkraftbegrenzung bzw. eines Einklemmschutzes ein Tachosignal zu berücksichtigen, und den Grenzwert der Verstellkraft in Abhängigkeit von dem Tachosignal einzustellen.

Der vorliegenden Erfindung liegt die Aufgabe zugrunde, ein Verfahren und eine Anordnung zur elektrischen Steuerung und Regelung der Bewegung eines elektrisch betriebenen Aggregats eines Kraftfahrzeuges zur Verfügung zu stellen, die es ermöglichen, in jedem Betriebszustand des Kraftfahrzeuges, insbesondere auch im stehenden bzw. parkenden Zustand, ein Höchstmaß an Sicherheit eines Einklemmschutzsystems zur Verfügung zu stellen und dabei die Gefahr von Fehlauslösungen des Einklemmschutzsystems gering zu halten.

Diese Aufgabe wird durch ein Verfahren mit den Merkmalen des Anspruchs 1 und eine Anordnung zur Durchführung des Verfahrens mit den Merkmalen des Anspruchs 15 gelöst. Bevorzugte und vorteilhafte Ausgestaltungen der Erfindung sind in den Unteransprüchen angegeben.

Durch eine automatische Deaktivierung des Schlechtwegstrekkenfilters bei Stillstand des Kraftfahrzeuges wird die Empfindlichkeit des Einklemmschutzes erhöht und sichergestellt, daß niedrige maximal zulässige Einklemmkräfte im Stand verwirklicht werden. Der Schlechtwegstreckenfilter des Einklemmschutzsystems nimmt normalerweise eine zeitliche Filterung mindestens einer Korrelationsgröße für die Verstellkraft des Aggregats vor. Durch seine Deaktivierung wird erreicht, daß bei einem überschreiten der maximal zulässigen Einklemmkraft (die gleich dem Grenzwert der Verstellkraft ist), im wesentlichen ohne zeitliche Filterung bzw. Verzögerung ein Abschalten oder Reversieren einer Verstellbewegung erfolgt.

So bewirkt der Einsatz eines Schlechtwegstreckenfilters durch die Betrachtung einer Korrelationsgröße der Verstellbewegung über einen bestimmten Zeitraum, daß im Einklemmfall ein Reversieren bzw. Abschalten einer Verstellung zeitverzögert erfolgt. Durch Abschalten des Schlechtwegstreckenfilters bei Stillstand des Kraftfahrzeugs wird diese zeitliche Verzögerung aufgehoben, so daß die Empfindlichkeit des Einklemmschutzsystems verbessert ist.

Die Erfindung stellt für den wichtigen Fall des Stillstandes des Kraftfahrzeuges, einem Zustand also, in dem möglicherweise Kinder unbeobachtet im Kraftfahrzeug spielen, eine maximale Empfindlichkeit des Einklemmschutzes zur Verfügung. Dementsprechend ist in einer bevorzugten Ausgestaltung der Erfindung die Empfindlichkeit des Einklemmschutzes bei Stillstand des Kraftfahrzeuges maximal, so daß für den Fall spielender Kinder im stehenden oder parkenden Auto ein Höchstmaß an Sicherheit des Einklemmschutzes gewährleistet ist.

In einer bevorzugten Ausgestaltung der Erfindung wird zur Erhöhung der Empfindlichkeit des Einklemmschutzes bei Stillstand des Kraftfahrzeuges zusätzlich der Grenzwert der Verstellkraft automatisch herabgesetzt, so daß die Empfindlichkeit des Einklemmschutzes erhöht ist. Die Erhöhung der Empfindlichkeit des Einklemmschutzes erfolgt hier durch Herabsetzen des Grenzwertes der maximal zulässigen Einklemmkraft, die über eine Korrelationsgröße für die Verstellkraft des Aggregats ermittelt wird.

Ob ein Stillstand des Kraftfahrzeugs vorliegt, kann auf zahlreiche Weise ermittelt werden. Der stehende oder parkende Zustand des Kraftfahrzeuges kann über eine ausgeschaltete Zündung, einen abgezogenen Zündschlüssel, das Öffnen mindestens einer Fahrzeugtür, ein Ausschalten des Motors, das Öffnen eines Sicherheitsgurtes eines Fahrzeuginsassen oder das Aussteigen eines Fahrzeuginsassen aus dem Kraftfahrzeug festgestellt werden.

Bei einem Kraftfahrzeug mit Passiv-Entry/Passiv-Go-System wird ein Stillstand des Kraftfahrzeugs bevorzugt angenommen, wenn der Identifikationsgeber aus dem Kraftfahrzeug entfernt wird. Bei Passiv-Entry/Passiv-Go-Systemen ist ein Identifikationsgeber mit einem Transponder vorgesehen, durch den das Kraftfahrzeug automatisch erkennt, wenn sich der Fahrzeugfahrer nähert bzw. wegbewegt und dementsprechend automatisch die Türen und Fenster des Kraftfahrzeuges geöffnet oder geschlossen werden. Weitere Anwendungen sind dabei möglich.

Weiter kann ein Stillstand des Kraftfahrzeuges sinnvollerweise angenommen werden, wenn bei laufendem Motor das Bremspedal betätigt und/oder kein Gang eingelegt ist. Gleiches gilt für den Fall, daß bei laufendem Motor und eingelegtem Gang eine bestimmte Motordrehzahlschwelle unterschritten ist. Das Fahrzeug befindet sich dann beispielsweise in Wartestellung an einer Ampel oder kurz vor dem Losfahren. Die beiden letztgenannten Varianten der Erfindung weisen den Vorteil auf, daß ein erfindungsgemäßes Herabsetzen der Empfindlichkeit des Einklemmschutzes auch bei Stillstandphasen des Kraftfahrzeugs während einer Fahrt zur Verfügung gestellt wird.

Weiter wird mit Vorteil ein Stillstand des Kraftfahrzeugs angenommen, wenn eine Fernbedienung zum Schließen des Aggregats oder Verschließen der Fahrzeugtüren betätigt wird oder wenn Automatikläufe mit ausgeschalteter Zündung erfolgen, z.B. angesteuert durch einen Regensensor. So ist es häufig üblich, über eine Fernbedienung sowohl die Türen des Kraftfahrzeugs zu verriegeln als auch die Fenster zu verschließen. Da sich möglicherweise noch Personen oder Tiere im Auto befinden, wird hier die höchste Empfindlichkeit des Einklemmschutzes eingestellt. Das gleiche gilt bei einem automatischen Schließen der Fenster, etwa initiiert durch den Regensensor eines Cabriolets. Bevorzugt ist bei einem automatischen Schließen des Aggregates oder der Fahrzeugtüren über eine Fernbedienung oder bei Automatikläufen mit ausgeschalteter Zündung die höchste Empfindlichkeit des Einklemmschutzes eingestellt, da der das Kraftfahrzeug verlassende Fahrer möglicherweise einen Einklemmfall nicht mehr einsehen und mögliche Hilferufe nicht mehr hören kann.

Es wird darauf hingewiesen, daß es im Rahmen der Erfindung liegt, daß der mit der maximal zulässigen Einklemmkraft korrelierende Grenzwert der Verstellkraft in Abhängigkeit von der Verstellposition, d.h. der Hubposition des Aggregats, eingestellt wird, wie es aus der DE 33 03 590 C2 bekannt ist. Dadurch ist es möglich, unterschiedliche lokale Reibungskräfte zu berücksichtigen und die maximal zulässige Verstellkraft für jede Hubposition möglichst niedrig einzustellen. Dabei kann eine adaptive Anpassung der maximal zulässigen Einklemmkraft an die jeweilige Verstellposition bzw. die dort vorliegenden Reibungswerte erfolgen, d.h. es kann ein selbstlernendes System eingesetzt werden.

Die erfindungsgemäße Anordnung zur Durchführung des Verfahrens nach Anspruch 1 weist ein indirekt erkennendes Einklemmschutzsystem mit einer Steuer- und Regelelektronik auf, die den Grenzwert der Verstellkraft einstellt und bei einer Überschreitung des eingestellten Grenzwertes Steuerbefehle an die Antriebseinheit des Aggregats zur Reversierung oder Abschaltung einer Antriebsbewegung abgibt. Gemäß der vorliegenden Erfindung ist die Steuer- und Regelelektronik dabei mit Mitteln zur Ermittlung eines Stillstandes des Kraftfahrzeuges verbunden und wird die Empfindlichkeit des Einklemmschutzes bei einem Stillstand des Kraftfahrzeugs erhöht.

Zusätzlich weist das Einklemmschutzsystem einen Filter, insbesondere Schlechtwegstreckenfilter, zur zeitlichen Filterung der erfaßten Korrelationsgröße für die Verstellkraft des Aggregats auf. Die Steuer- und Regelelektronik ist mit dem Filter verbunden und deaktiviert diesen zur Erhöhung der Empfindlichkeit des Einklemmschutzes.

Ergänzend kann vorgesehen sein, daß die Steuer- und Regelelektronik den einstellbaren Grenzwert der Verstellkraft bei einem Stillstand des Kraftfahrzeuges herabsetzt, so daß die Empfindlichkeit des Einklemmschutzes erhöht wird.

Die Mittel zur Ermittlung eines Stillstandes des Kraftfahrzeuges können durch einen Sensor verwirklicht werden, der den Zustand der Zündung des Kraftfahrzeuges und/oder das Vorhandensein des Zündschlüssels im Zündschloß erkennt. Alternativ oder ergänzend wird der Schließzustand mindestens einer Fahrzeugtür erfaßt, oder der Motorzustand, insbesondere die Motordrehzahl, oder die Signale des Identifikationsgebers eines Passiv-Entry/Passiv-Go-Systems, oder ein Aussteigen eines Fahrzeuginsassen oder das Öffnen eines Sicherheitsgurtes. Weiter kann der Stillstand des Kraftfahrzeuges über Mittel erfaßt werden, die eine Betätigung des Bremspedales und/oder das Einlegen eines Ganges erkennen oder die den Einsatz einer Fernbedienung zum Schließen des Aggregats und/oder der Türen des Kraftfahrzeuges und/oder eine Aktivierung eines Automatiklaufes des Aggregates bei ausgeschalteter Zündung erfassen. Die genannten Größen werden entweder direkt durch entsprechende Sensorelemente oder indirekt erfaßt werden.

In einer bevorzugten Ausführung der erfindungsgemäßen Anordnung ist die Steuer- und Regelelektronik dabei über einen seriellen Datenbus mit den Mitteln zur Ermittlung eines Stillstands des Kraftfahrzeugs verbunden. Hierdurch werden eine digitale Signalisierung und Datenübertragung unter Einsatz digitaler Bordintelligenz und ein modularer Aufbau des Systems ermöglicht.

Bevorzugt ist eine Einrichtung zur Erfassung einer Korrelationsgröße für die Verstellkraft des Aggregats vorgesehen, die mit der Steuer- und Regelelektronik verbunden ist und die die Periodendauer und/oder den elektrischen Strom und/oder das Drehmoment des Antriebsmotors der Antriebseinheit erfaßt. Eine derartige Einrichtung ist beispielsweise ein elektrischer Leistungsmesser, der permanent die Leistungsaufnahme des Antriebsmotors erfaßt, oder ein Impulsgeber, der die Umdrehungszahl bzw. die Periodendauer der Motorwelle des Antriebsmotors erfaßt.

Die Erfindung wird nachfolgend unter Bezugnahme auf die Figuren der Zeichnung an mehreren Ausführungsbeispielen näher erläutert. Es zeigen:
- Figur 1a -: eine schematische Darstellung der erfindungsgemäßen Abhängigkeit des Grenzwerts der Verstellkraft, wobei der Grenzwert der Verstellkraft zusätzlich vom Verstellweg des Fensterhebersystems abhängig ist;
- Figur 1b -: eine schematische Darstellung der erfindungsgemäßen Abhängigkeit des Grenzwerts der Verstellkraft, wobei der Grenzwert der Verstellkraft vom Verstellweg des Fensterhebersystems unabhängig ist;
- Figur 2a -: eine schematische Darstellung des Motorstroms bzw. Motordrehmoments eines Antriebsmotors in Abhängigkeit vom Verstellweg eines Fensterhebersystems einschließlich einer Hüllkurve, der die maximal zulässige Verstellkraft entspricht;
- Figur 2b -: eine schematische Darstellung des Motorstroms bzw. Motordrehmoments gemäß Figur 1a, wobei die Hüllkurve eine Konstante ist;
- Figur 3 -: den Grenzwert des Motorstroms bzw. Motordrehmoments an einer bestimmten Hubposition in Abhängigkeit davon, ob sich das Fahrzeug im Stillstand befindet oder nicht;
- Figur 4 -: ein Ablaufdiagramm der Variante des erfindungsgemäßen Verfahrens, bei der im Stillstand des Fahrzeugs der Schlechtwegstreckenfilter ausgeschaltet wird.
- Figur 5 -: eine schematische Darstellung des Aufbaus einer erfindungsgemäßen Anordnung zur Steuerung eines Fensterhebersystems.

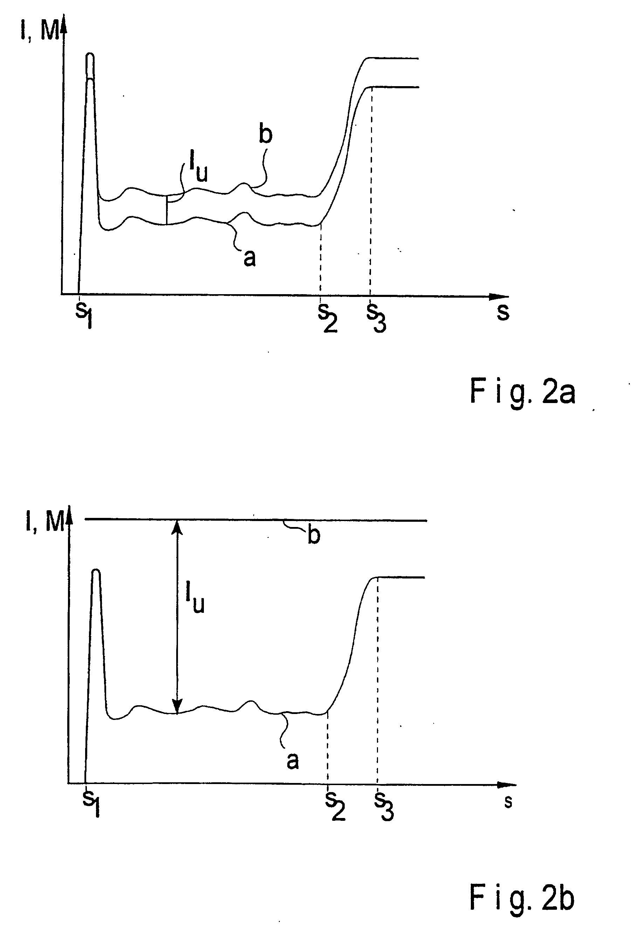

Anhand der Figur 2a seien zunächst die verwendeten Begriffe erläutert. Figur 2a zeigt schematisch eine Meßkurve a, die den vom Verstellmotor bzw. Antriebsmotor eines Fensterhebersystems aufgenommenen Strom I bzw. das abgegebene Motordrehmoment M über der Hubposition s darstellt. Das abgegebene Motordrehmoment M ist dabei dem vom Verstellmotor aufgenommenen Strom I proportional.

Die Hubposition s₁ stellt den Start einer Fensterscheibe bei einem Verschließvorgang am unteren Anschlag dar, bei der Hubposition s₂ beginnt der Einlauf in die obere Fensterdichtung und bei der Hubposition s₃ ist die Fensterscheibe am oberen Türrahmen am Anschlag. Die Kurve a entspricht der Kraft, die zum Verstellen der Fensterscheibe tatsächlich erforderlich ist.

Die Normalkurve a für die Stromaufnahme des Antriebsmotors wird beispielsweise durch einen Normierungslauf vor der Installation der Fensterscheibe und des Fensterhebersystems ermittelt.

Die maximal zulässige Verstellkraft, d.h. der Grenzwert der Verstellkraft, wird durch eine Hüllkurve b festgelegt. Die maximal zulässige Verstellkraft entspricht dem maximal zulässigen Drehmoment des Antriebsmotors, das wiederum dem maximal zulässigen, vom Verstellmotor aufgenommenen Strom entspricht. Die Hüllkurve b begrenzt den maximal zulässigen Strom und damit die maximal zulässige Verstellkraft. Beispielsweise ist vorgesehen, die maximal zulässige Verstellkraft auf weniger als 100 N zu begrenzen.

Der Differenz I_{U} zwischen der Hüllkurve b und der Normalkurve a entspricht die Überschußkraft, d.h. die Kraft, die die zum Verstellen der Fensterscheibe gerade benötigte Kraft übersteigt. Die Überschußkraft stellt dabei eine Toleranz zur Verfügung, die verhindert, daß bei geringfügigen Störungen wie Bodenwellen oder waschbrettartigen Fahrbahnbelägen, oder bei einer wetterbedingten Schwergängigkeit (z.B. Eis) ein Einklemmfall angenommen wird.

Erreicht bei einer Hubbewegung der Fensterscheibe der Strom I des Elektromotors den durch die Hüllkurve b festgelegten Maximalwert, der dem Maximalwert der Verstellkraft bzw. der Überschußkraft entspricht, so erfolgt eine Abschaltung oder Reversierung der Verstellbewegung. Im Einklemmfall, insbesondere im Fall eines "harten" Einklemmens, d.h. eines Einklemmens eines Gegenstandes oder eines Körperteils mit sofortigem Stillstand des elektrisch betriebenen Aggregats, ist der durch die Hüllkurve b festgelegte Grenzwert der Verstellkraft gleich der maximal zulässigen Einklemmkraft, bei deren Überschreiten ein Abschalten oder Reversieren der Scheibenverstellung erfolgt.

In Figur 2b ist die maximal zulässige Verstellkraft anders als in Figur 2a nicht von der Hubposition s abhängig, sondern über den gesamten Verstellweg konstant. Entsprechend ist der durch die Hüllkurve b festgelegte Maximalwert des Stroms I bzw. des Drehmomentes M konstant. Diese vereinfachte Festlegung der maximal zulässigen Verstellkraft weist den Nachteil auf, daß sie den wechselnden normalen Leistungsbedarf des Antriebsmotors entlang des Verstellweges nicht berücksichtigt und die der Kurve a hinzuaddierte Überschußkraft (entsprechend I_{U}) daher teilweise unnötig groß ist, was zu einem unnötig hohen Wert der maximal zulässigen Verstellkraft bzw. der maximal zulässigen Einklemmkraft führt. Andererseits kann die Verstellelektronik vereinfacht und auf einen Normierungslauf zur Ermittlung der Normalkurve a verzichtet werden.

In Figur 1a ist eine erfindungsgemäße Erniedrigung der maximal zulässigen Verstellkraft bei einem Stillstand des Kraftfahrzeuges dargestellt. Danach wird bei einem Stillstand des Kraftfahrzeugs (v = 0) der Grenzwert der Verstellkraft für jede Hubposition auf einen Minimalwert (entsprechend der Hüllkurve b₁) gesetzt, d.h. die Differenz zwischen der Hüllkurve b₁ und der Normalkurve a ist minimal. Hierdurch ist die Empfindlichkeit des Einklemmschutzsystems maximal.

Bei einer Geschwindigkeit des Kraftfahrzeugs größer Null (v > 0) wird das Herabsetzen der Hüllkurve b₂ des Motorstroms, die den Grenzwert der Verstellkraft festlegt, aufgehoben. Entsprechend unempfindlicher ist das Einklemmschutzsystem.

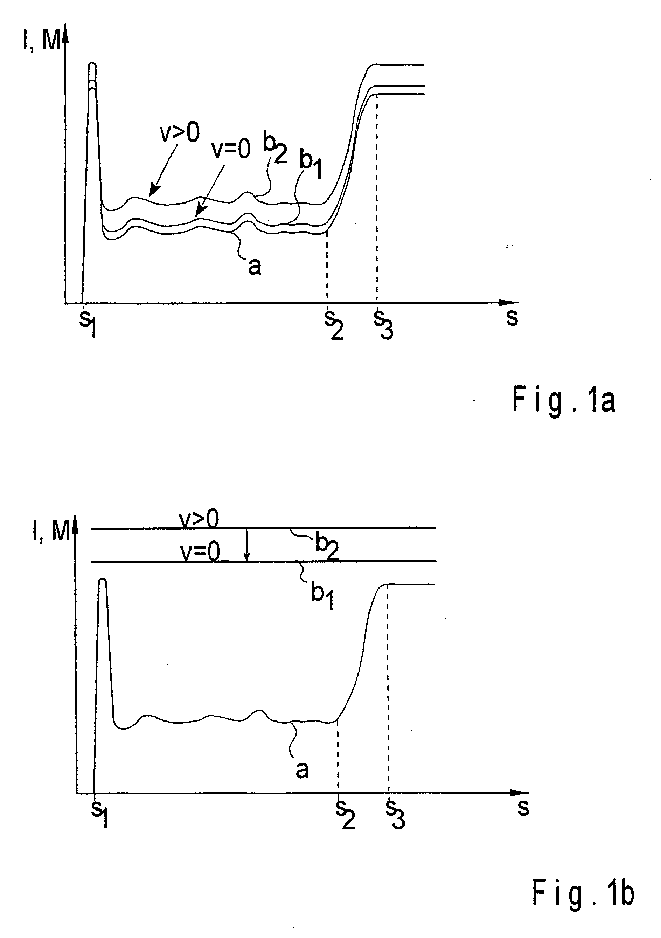

In Figur 1b ist dieser Sachverhalt für den Fall eines über den Verstellweg s konstanten Grenzwertes der Verstellkraft dargestellt.

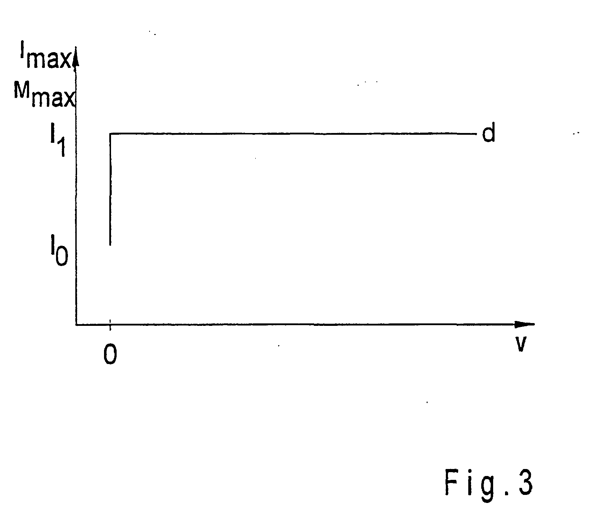

In Figur 3 sind der vom Verstellmotor maximal aufgenommene Strom Iₘₐₓ bzw. das maximal abgegebene Drehmoment Mₘₐₓ für eine bestimmte Hubposition dargestellt. Bei Stillstand des Kraftfahrzeuges (V = 0) liegt der Grenzwert der Verstellkraft bei einem Minimalwert I₀. Die maximal zulässige Einklemmkraft ist erniedrigt. Mit Bewegung des Kraftfahrzeuges (V > 0) wird der Grenzwert der Verstellkraft auf einen konstanten höheren Wert I₁ gesetzt (Kurve D).

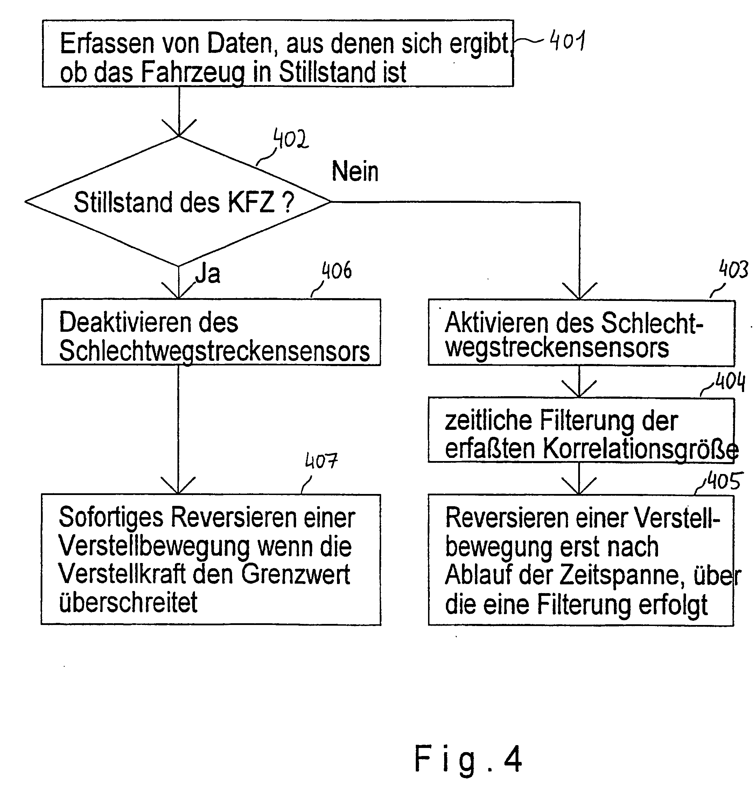

In Figur 4 ist eine alternative Ausgestaltung der Erfindung dargestellt, bei der die Erhöhung der Empfindlichkeit des Einklemmschutzsystems nicht durch ein Herabsetzen der maximal zulässigen Einklemmkraft erreicht wird, sondern durch Deaktivieren eines Schlechtwegstreckensensors. Allerdings wird darauf hingewiesen, daß auch beide Varianten gleichzeitig eingesetzt werden können.

Gemäß Figur 4 werden zunächst Daten erfaßt, aus denen sich ergibt, ob das Fahrzeug in Stillstand ist oder nicht (Schritt 401). Wie noch im einzelnen ausgeführt wird, wird dies beispielsweise durch Überwachung des Zustandes der Zündung des Kraftfahrzeuges festgestellt.

Sofern kein Stillstand des Kraftfahrzeuges detektiert wird (Schritt 402), wird der Schlechtwegstreckensensor des Einklemmschutzsystemes aktiviert bzw. eine bereits vorhandene Aktivierung beibehalten (Schritt 403). Der Schlechtwegstreckensensor führt eine zeitliche Filterung der erfaßten Korrelationsgröße der Verstellbewegung durch (Schritt 404). Beispielsweise ermittelt er die Drehzahl des Antriebsmotors des Aggregats. Im Rahmen der durchgeführten zeitlichen Filterung prüft der Schlechtwegstreckensensor, ob im Falle eines Überschreitens des Grenzwertes der Verstellkraft des (bzw. der maximal zulässigen Einklemmkraft) die erhöhte Verstellkraft um einen Mittelwert schwankt, oder aber ein wirklicher Anstieg vorliegt.

Im ersten Fall ist davon auszugehen, daß lediglich eine Schlechtwegstrecke vorliegt, und die um einen Mittelwert schwankenden Werte auf eine Beschleunigung des Stellorgans des Aggregats aufgrund der Schlechtwegstrecke zurückzuführen sind. Das Abschaltkriterium bzw. die maximal zulässige Verstellkraft werden dann hochgesetzt, so daß die Empfindlichkeit des Einklemmschutzsystems herabgesetzt ist und eine Fehlauslösung aufgrund der Schlechtwegstrecke vermieden wird. Im zweiten Fall erfolgt ein Abschalten oder Reversieren der Verstellbewegung des Aggregats. Aufgrund der erforderlichen zeitlichen Filterung der erfaßten Korrelationsgröße kann dieses Abschalten oder Reversieren jedoch erst mit einer gewissen Zeitverzögerung erfolgen, die üblicherweise etwa 30 ms beträgt (Schritt 405).

Sofern ein Stillstand des Kraftfahrzeuges detektiert wird (Schritt 402), wird erfindungsgemäß der Schlechtwegstreckensensor deaktiviert (Schritt 406). Hierdurch wird eine Zeitverzögerung beim Abschalten bzw. Reversieren einer Verstellbewegung im Einklemmfall vermieden. Vielmehr erfolgt ein sofortiges Reversieren der Verstellbewegung des Aggregats, wenn die Verstellkraft den maximal zulässigen Grenzwert bzw. die maximal zulässige Einklemmkraft überschreitet (Schritt 407). Dies führt zu einer erhöhten Empfindlichkeit des Einklemmschutzes bei Stillstand des Kraftfahrzeuges. Gleichzeitig wird die Gefahr von Fehlauslösungen des Einklemmschutzes nicht erhöht, da der Grenzwert der Verstellkraft bei Stillstand des Kraftfahrzeuges in dieser Ausführungsvariante nicht herabgesetzt wird.

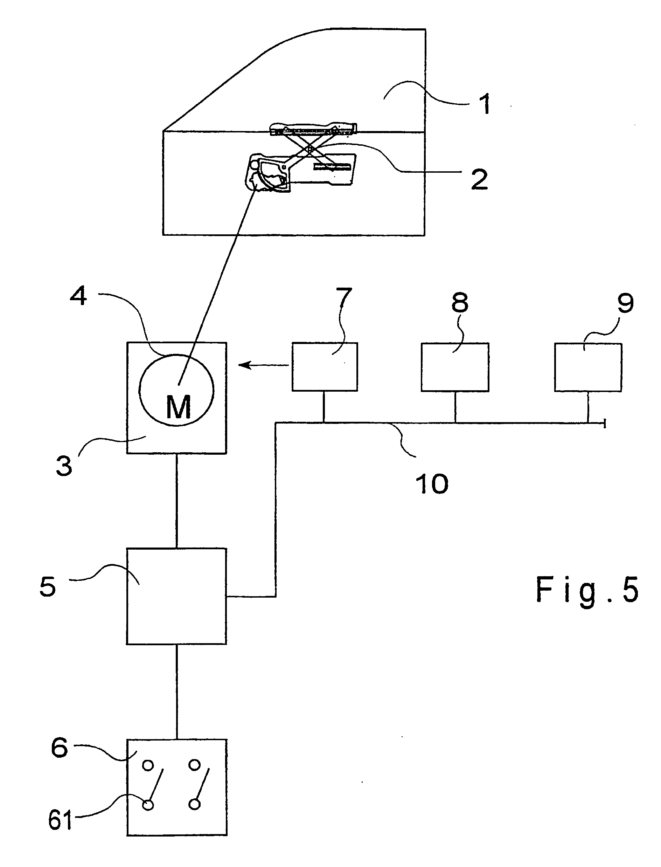

In Figur 5 ist ein Blockschaltbild einer Anordnung zur Realisierung des erfindungsgemäßen Verfahrens bei einem Fensterheber-Verstellsystem als elektrisch betriebenem Aggregat zum Verstellen einer Fensterscheibe 1 mittels einer Fensterhebermechanik 2 dargestellt, bei der es sich beispielsweise um die Mechanik eines Seilfensterhebers oder eines Kreuzarmfensterhebers handelt.

Die Fensterhebermechanik 2 wird durch eine Antriebseinheit 3 mit einem Antriebsmotor 4 angetrieben. Die Antriebseinheit 4 wird durch eine Steuer- und Regelelektronik 5 gesteuert und geregelt. Die Steuer- und Regelelektronik 5 besteht aus einem Mikroprozessor und üblichen zugeordneten Bausteinen wie einem RAM-Datenspeicher. Die Steuer- und Regelelektronik 5 ist mit einem Bedienelement 6 verbunden, über das Steuerbefehle, etwa zum Heben bzw. Senken der Fensterscheibe, an die Steuer- und Regelelektronik 5 durch einen Nutzer gegeben werden können. Das Bedienelement 6 weist geeignete elektrische Schaltelemente 61 auf, die bevorzugt in der Mittelkonsole des Fahrzeugs oder an der Türinnenverkleidung angeordnet sind.

Weiter ist die Steuer- und Regelelektronik 5 über einen seriellen Datenbus 10 mit mehreren Sensoren bzw. Einrichtungen 7, 8, 9 verbunden. Bei dem seriellen Datenbus 10 handelt es sich um einen CAN (Controller Area Network)-Bus, der durch eine Zwei-Drahtleitung realisiert wird, auf der digitale Daten nach einem festgelegten, standardisierten Protokoll seriell übertragen werden.

Die Sensoren bzw. Einrichtungen 7, 8, 9 sind jeweils über eine Schnittstelle (nicht dargestellt) an den CAN-Bus 10 angeschlossen.

Alternativ sind auch noch weitere Elemente der Anordnung, etwa das Bedienelement 6 und die Antriebseinheit 4 an den seriellen CAN-Datenbus angeschlossen.

Der Sensor 7 dient der Erfassung einer Korrelationsgröße für die Verstellkraft des Aggregats. Dazu wird der elektrische Strom des Antriebsmotors 4 oder das Drehmoment des Antriebsmotors 4 oder mittels Hallsensoren die Periodendauer des Antriebsmotors 4 gemessen und diese Information an die Steuer- und Regelelektronik 5 geleitet.

Bei dem Sensor 8 handelt es sich um einen Schlechtwegstreckenfilter, der auswertet, ob eine Schlechtwegstrecke vorliegt, und Steuersignale an die Steuer- und Regelelektronik 5 leitet. Der Sensor 8 kann auch in die Steuer- und Regelelektronik 5 integriert bzw. durch den Mikroprozessor und zugehörige Software ausgebildet sein. Zur Auswertung, ob eine Schlechtwegstrecke vorliegt, erfolgt eine zeitliche Filterung der Signale, wie bereits beschrieben.

Die Einrichtung 9 dient der Ermittlung, ob sich das Kraftfahrzeug in Stillstand befindet. Dies kann auf vielfache Art und Weise ermittelt werden. In einer bevorzugten Ausgestaltung handelt es sich bei der Einrichtung 9 um das Zündschloß des Kraftfahrzeugs, das über den seriellen Datenbus 10 direkt an die Steuer- und Regelelektronik 5 angeschlossen ist. Das Zündschloß erfaßt dabei den Zustand der Zündung des Kraftfahrzeuges sowie über das S-Kontaktsignal (Schlüssel-Kontakt-Signal), ob ein Zündschlüssel im Zündschloß vorhanden ist, und überträgt entsprechende Signale über den Bus 10 an die Steuer- und Regelelektronik 5.

Alternativ wird durch eine gesonderte Leitungsverbindung zwischen Steuer- und Regeleinheit und Zündschloß direkt gemessen, ob Signale vorliegen, die eine Zündung oder einen S-Kontakt betreffen. Auch kann ein gesonderter Sensor zur Messung des Zustandes der Zündung vorgesehen sein. Die Steuer- und Regeleinheit ist bevorzugt in der Kraftfahrzeugtür angeordnet.

In einem weiteren Ausführungsbeispiel weist die Einrichtung 9 Mittel auf, durch die der Schließzustand mindestens einer Fahrzeugtür erkannt wird. Hierzu ist beispielsweise für jede Tür das Türschloß (nicht dargestellt) an den Bus 10 angeschlossen, so daß Signale betreffend den Öffnungszustand des Schlosses an die Steuer- und Regeleinheit 5 übertragen und dort ausgewertet werden. Der Schließzustand der Türen wird bevorzugt in Verbindung dem Zustand der Zündung ausgewertet, um sicher einen Stillstand des Kraftfahrzeuges zu erfassen.

Eine weitere Möglichkeit zur Ermittlung eines Stillstandes des Kraftfahrzeuges besteht darin, daß die Einrichtung 9 den Motorzustand, insbesondere die Motordrehzahl erfaßt. In diesem Fall kann die Einrichtung 9 der ohnehin vorgesehene Drehzahlmesser sein, und die entsprechende Information über den seriellen Bus 10 an die Steuer- und Regeleinheit übertragen werden.

Weiter kann vorgesehen sein, daß die Einrichtung 9 eine Sensoreinrichtung ist, die Transpondersignale des Identifikationsgebers eines Passiv-Entry/Passiv-Go-Systems erkennt. Sobald keine Signale mehr empfangen werden, ist dies ein sicheres Indiz dafür, daß der Fahrzeughalter sich vom Fahrzeug entfernt hat und das Auto parkt, so daß dann die Empfindlichkeit des Einklemmschutzes heraufgesetzt werden muß, um möglicherweise im Auto verbleibende Personen, wie kleine Kinder oder Tiere, zu schützen. Bevorzugt ist der Sensor zur Erfassung der Transpondersignale ebenfalls an den seriellen Bus angeschlossen und setzt die Steuer- und Regeleinrichtung 5 bei Fehlen der Transpondersignale die Empfindlichkeit des Einklemmschutzes automatisch herauf.

Weiter kann es sich bei der Einrichtung 9 um ein Insassenerkennungssystem oder eine Sitzbelegungserkennung handeln, die das Aussteigen des Fahrers oder Beifahrers aus dem Kraftfahrzeug erkennt, was als sicheres Indiz für einen Stillstand des Kraftfahrzeuges zu werten ist. Auch kann das Öffnen des Sicherheitsgurtes für Fahrer und/oder Beifahrer überwacht werden, wobei auch das Gurtsystem bevorzugt an einen seriellen Bus angeschlossen ist.

In einer weiteren Ausgestaltung ermittelt die Einrichtung 9 eine Betätigung des Bremspedales und/oder das Einlegen eines Ganges. Bei getretenem Bremspedal, insbesondere in Verbindung mit ausgekuppeltem Gang, ist ebenfalls von einem Stillstand des Kraftfahrzeuges auszugehen. Die Einrichtung 9 wird hier durch die Bremsvorrichtung bzw. die Kupplung verwirklicht, die wiederum bevorzugt über den seriellen Bus entsprechende Signale an die Steuer- und Regeleinrichtung sendet. Alternativ ist statt eines seriellen Busses eine direkte Leitungsverbindung zwischen der Einrichtung 9 und der Steuer- und Regeleinrichtung vorgesehen.

In einer weiteren Ausgestaltung besteht die Einrichtung 9 in einem Sensor, der Signale einer Fernbedienung zum Schließen einer Fensterscheibe und/oder der Kraftfahrzeugtüren erfaßt. Ein solches Signal wird der Steuer- und Regeleinrichtung signalisiert, die daraufhin die Empfindlichkeit des Einklemmschutzes heraufsetzt. Es handelt sich hier um einen besonders kritischen Fall, da möglicherweise noch kleine Kinder oder Tiere im Auto vorhanden sind, und die sich entfernende Person, die per Fernbedienung ein Schließen des Kraftfahrzeugs, insbesondere der Fahrzeugfenster, veranlaßt, einen Einklemmfall nicht mehr beobachten kann.

Gleiches gilt für den Fall, daß es sich bei der Einrichtung 9 um einen Sensor handelt, der unter bestimmten Voraussetzungen einen Automatiklauf zum Schließen des Aggregats bzw. des Fensters bei ausgeschalteter Zündung veranlaßt, beispielsweise einen Regensensor eines Cabriolets.

Es wird darauf hingewiesen, daß die vorgenannten Informationen zur Ermittlung eines Stillstandes des Kraftfahrzeuges auch parallel eingesetzt werden können.

Die Steuer- und Regelelektronik 5 legt die Empfindlichkeit des Einklemmschutzes fest. Dies erfolgt wie beschrieben in Abhängigkeit davon, ob sich das Kraftfahrzeug in Stillstand befindet oder nicht. Hierzu werden die Signale der Einrichtung 9 zur Ermittlung eines Stillstands des Kraftfahrzeuges ausgewertet.

Mittels der Signale der Sensoreinrichtung 7, die eine Korrelationsgröße für die Verstellkraft des Aggregats erfaßt, ermittelt die Steuer- und Regelelektronik 5 fortlaufend die aktuelle Verstellkraft. Bei einem Stillstand des Fahrzeugs wird der Schlechtwegstreckensensor 8 aktiviert und/oder der mit der maximal zulässigen Einklemmkraft korrelierenden Grenzwert der Verstellkraft herabgesetzt.

Bei einer Überschreitung des Grenzwertes der Verstellkraft nimmt die Steuer- und Regelelektronik 5 einen Einklemmfall an und generiert Steuerbefehle an die Antriebseinheit 4 zur Reversierung oder Abschaltung einer Antriebsbewegung. Hierzu steuert die Steuer- und Regelelektronik 5 eine Schalteinrichtung (nicht dargestellt) der Antriebseinheit, die beispielsweise aus Halbleiter-Schaltelementen besteht und bei deren Ansteuerung die Stromrichtung durch den Elektromotor 4 geändert wird, so daß die Bewegungsrichtung umgekehrt wird.

Bei deaktiviertem Schlechtwegstreckensensor 8 entfällt eine Zeitfilterung der durch die Sensoreinrichtung 7 erfaßten Signale, so daß bei einer Überschreitung des Grenzwertes der Verstellkraft eine Reaktion des Einklemmschutzsystems und ein Reversieren der Antriebsbewegung ohne zeitliche Verzögerung erfolgt.

Optional kann zusätzlich vorgesehen sein, daß die Steuerund Regelelektronik 5 die Empfindlichkeit des Einklemmschutzes während der Zeit der Betätigung des Anlassers des Kraftfahrzeugs herabsetzt, damit auch in dieser kurzen Phase geänderter Kennlinien ein wirksamer Einklemmschutz vorliegt.

## Patentansprüche

1. Verfahren zur elektrischen Steuerung und Regelung der Bewegung eines elektrisch betriebenen Aggregats (2) eines Kraftfahrzeugs, insbesondere eines Fensterhebers oder Schiebedachs, mit einem Einklemmschutzsystem, bei dem eine Korrelationsgröße für die Verstellkraft des Aggregats gemessen und zwecks eines Einklemmschutzes eine Abschaltung oder Reversierung einer Verstellbewegung erfolgt, sofern die Verstellkraft einen Grenzwert, der der maximal zulässigen Einklemmkraft entspricht, überschreitet, und bei dem die Empfindlichkeit des Einklemmschutzes bei Stillstand des Kraftfahrzeugs automatisch erhöht wird,
**dadurch gekennzeichnet,**
**daß** zur Erhöhung der Empfindlichkeit des Einklemmschutzes bei Stillstand des Kraftfahrzeugs ein Filter (8), insbesondere ein Schlechtwegstreckenfilter, der eine zeitliche Filterung der Korrelationsgröße für die Verstellkraft des Aggregats vornimmt, deaktiviert wird.

2. Verfahren nach Anspruch 1, **dadurch gekennzeichnet, daß** die Empfindlichkeit des Einklemmschutzes bei Stillstand des Kraftfahrzeugs auf einen maximalen Wert gesetzt wird.

3. Verfahren nach Anspruch 1 oder 2, **dadurch gekennzeichnet, daß** zur Erhöhung der Empfindlichkeit des Einklemmschutzes bei Stillstand des Kraftfahrzeugs der Grenzwert der Verstellkraft automatisch herabgesetzt wird, so daß die Empfindlichkeit des Einklemmschutzes erhöht ist.

4. Verfahren nach mindestens einem der vorangehenden Ansprüche, **dadurch gekennzeichnet, daß** ein Stillstand des Kraftfahrzeugs darüber erfaßt wird, ob die Zündung ausgeschaltet und/oder der Zündschlüssel abgezogen ist.

5. Verfahren nach Anspruch 4, **dadurch gekennzeichnet, daß** zur Ermittlung eines Stillstands des Kraftfahrzeugs zusätzlich erfaßt wird, ob nach Ausschalten der Zündung und/oder Abziehen des Zündschlüssels eine der Fahrzeugtüren, insbesondere eine der vorderen Fahrzeugtüren geöffnet wird.

6. Verfahren nach mindestens einem der vorangehenden Ansprüche, **dadurch gekennzeichnet, daß** ein Stillstand des Kraftfahrzeugs über ein Ausschalten des Motors erfaßt wird.

7. Verfahren nach mindestens einem der vorangehenden Ansprüche, **dadurch gekennzeichnet, daß** ein Stillstand des Kraftfahrzeugs angenommen wird, wenn bei einem Kraftfahrzeug mit Passive-Entry/Passive-Go System der Identifikationsgeber aus dem Fahrzeug entfernt wird.

8. Verfahren nach mindestens einem der vorangehenden Ansprüche, **dadurch gekennzeichnet, daß** ein Stillstand des Kraftfahrzeugs angenommen wird, wenn ein Insassenerkennungssystem oder eine Sitzbelegungserkennung das Aussteigen und/oder das Öffnen des Sicherheitsgurtes eines Fahrzeuginsassen erkennen, insbesondere des Fahrers oder Beifahrers.

9. Verfahren nach mindestens einem der vorangehenden Ansprüche, **dadurch gekennzeichnet, daß** ein Stillstand des Kraftfahrzeugs angenommen wird, wenn eine der Türen des Kraftfahrzeugs geöffnet wird.

10. Verfahren nach mindestens einem der vorangehenden Ansprüche, **dadurch gekennzeichnet, daß** ein Stillstand des Kraftfahrzeugs angenommen wird, wenn bei laufendem Motor das Bremspedal betätigt und/oder kein Gang eingelegt ist.

11. Verfahren nach mindestens einem der vorangehenden Ansprüche, **dadurch gekennzeichnet, daß** ein Stillstand des Kraftfahrzeugs angenommen wird, solange bei laufendem Motor und eingelegtem Gang eine bestimmte Motor-Drehzahlschwelle unterschritten ist.

12. Verfahren nach mindestens einem der vorangehenden Ansprüche, **dadurch gekennzeichnet, daß** ein Stillstand des Kraftfahrzeugs angenommen wird, wenn eine Fernbedienung zum Schließen des Aggregats oder Verschließen der Fahrzeugtüren betätigt wird und/oder Automatikläufe mit ausgeschalteter Zündung erfolgen, z.B. angesteuert durch einen Regensensor.

13. Verfahren nach Anspruch 12, **dadurch gekennzeichnet, daß** beim Schließen des Aggregats (2) oder der Fahrzeugtüren über eine Fernbedienung oder bei Automatikläufen mit ausgeschalteter Zündung die höchste Empfindlicheit des Einklemmschutzes eingestellt wird.

14. Verfahren nach mindestens einem der vorangehenden Ansprüche, **dadurch, gekennzeichnet, daß** der mit der maximal zulässigen Einklemmkraft korrelierende Grenzwert der Verstellkraft zusätzlich in Abhängigkeit von der Verstellposition des Aggregats (5) eingestellt oder adaptiv angepaßt wird.

15. Anordnung zur Durchführung des Verfahrens nach Anspruch 1 mit einem elektrisch betriebenen Aggregat (2) eines Kraftfahrzeugs und einem indirekt erkennenden Einklemmschutzsystem, dessen Steuer- und Regelelektronik (5) eine Korrelationsgröße für die Verstellkraft des Aggregats (2) auswertet, wobei die Steuer- und Regelelektronik (5) einen mit einer maximal zulässigen Einklemmkraft korrelierenden Grenzwert der Verstellkraft einstellt und bei einer Überschreitung dieses Grenzwertes Steuerbefehle an die Antriebseinheit (4) des Aggregats (2) zur Reversierung oder Abschaltung einer Antriebsbewegung abgibt, und wobei die Steuer- und Regelelektronik (5) mit Mitteln (9) zur Ermittlung eines Stillstands des Kraftfahrzeugs verbunden ist,
**dadurch gekennzeichnet,**
**daß** das Einklemmschutzsystem einen Filter (8), insbesondere einen Schlechtwegstreckenfilter, zur zeitlichen Filterung der Korrelationsgröße für die Verstellkraft des Aggregats (2) aufweist und die Steuer- und Regelelektronik (5) den Filter (8) bei einem Stillstand des Kraftfahrzeugs deaktiviert.

16. Anordnung nach Anspruch 15, **dadurch gekennzeichnet, daß** die Steuer- und Regelelektronik (5) den Grenzwert der Verstellkraft bei einem Stillstand des Kraftfahrzeugs herabsetzt.

17. Anordnung nach Anspruche 15 oder 16, **dadurch gekennzeichnet, daß** die Mittel (9) zur Ermittlung eines Stillstande des Kraftfahrzeugs den Zustand der Zündung des Kraftfahrzeugs und/oder das Vorhandensein des Zündschlüssels im Zündschloß erkennen.

18. Anordnung nach mindestens einem der Ansprüche 15 bis 17, **dadurch gekennzeichnet, daß** die Mittel (9) zur Ermittlung eines Stillstands des Kraftfahrzeugs den Schließzustand mindestens einer Fahrzeugtür erkennen.

19. Anordnung nach mindestens einem der Ansprüche 15 bis 18, **dadurch gekennzeichnet, daß** die Mittel (9) zur Ermittlung eines Stillstands des Kraftfahrzeugs den Motorzustand, insbesondere die Motordrehzahl erfassen.

20. Anordnung nach mindestens einem der Ansprüche 15 bis 19, **dadurch gekennzeichnet, daß** die Mittel (9) zur Ermittlung eines Stillstands des Kraftfahrzeugs die Signale des Identifikationsgebers eines Passive-Entry/Passive-Go Systems erkennen.

21. Anordnung nach mindestens einem der Ansprüche 15 bis 20, **dadurch gekennzeichnet, daß** die Mittel (9) zur Ermittlung eines Stillstands des Kraftfahrzeugs das Aussteigens und/oder das Öffnens des Sicherheitsgurtes mindestens eines Fahrzeuginsassen erkennen.

22. Anordnung nach mindestens einem der Ansprüche 15 bis 21, **dadurch gekennzeichnet, daß** die Mittel (9) zur Ermittlung eines Stillstands des Kraftfahrzeugs eine Betätigung des Bremspedals und/oder das Einlegen eines Ganges erkennen.

23. Anordnung nach mindestens einem der Ansprüche 15 bis 22, **dadurch gekennzeichnet, daß** die Mittel (9) zur Ermittlung eines Stillstands des Kraftfahrzeugs den Einsatz einer Fernbedienung zum Schließen des Aggregats und/ oder der Türen des Kraftfahrzeugs und/oder eine Aktivierung eines Automatiklaufes des Aggregates bei ausgeschalteter Zündung, z.B. gesteuert durch einen Regensensor, erfassen.

24. Anordnung nach mindestens einem der Ansprüche 15 bis 23, **dadurch gekennzeichnet, daß** die Steuer- und Regelelektronik (5) über einen seriellen Datenbus (10) mit den Mitteln (9) zu Ermittlung eines Stillstands des Kraftfahrzeugs verbunden ist.

25. Anordnung nach mindestens einem der Ansprüche 15 bis 24, **gekennzeichnet durch** eine Einrichtung (7) zur Erfassung einer Korrelationsgröße für die Verstellkraft des Aggregats, die mit der Steuer- und Regelelektronik (5) verbunden ist und die die Periodendauer und/oder den elektrischen Strom und/oder das Drehmoment eines Antriebsmotors (4) der Antriebseinheit (3) erfaßt.

## Claims

1. Method for electrically controlling and regulating the movement of an electrically operated aggregate (2) of a motor vehicle, more particularly a window lifter or sliding roof, with an anti-jamming system in which a correlation variable is measured for the adjustment force of the aggregate and for the purpose of anti-jamming protection an adjusting movement is switched off or reversed if the adjustment force exceeds a limit value which corresponds to the maximum permissible jamming force, and in which the sensitivity of the anti-jamming system is increased automatically when the motor vehicle is at a standstill
**characterised in that**
for increasing the sensitivity of the anti-jamming system when the motor vehicle is at a standstill a filter (8), in particular a rough road filter, which undertakes a time based filtering of the correlation variable for the adjustment force of the unit, is deactivated.

2. Method according to claim 1 **characterised in that** the sensitivity of the anti-jamming system is set to a maximum value when the motor vehicle is at a standstill.

3. Method according to claim 1 or 2 **characterised in that** in order to increase the sensitivity of the anti-jamming system when the motor vehicle is at a standstill the limit value of the adjustment force is automatically reduced so that the sensitivity of the anti-jamming system is increased.

4. Method according to at least one of the preceding claims **characterised in that** a stationary state of the motor vehicle is identified according to whether the ignition is switched off and/or the ignition key is removed.

5. Method according to claim 4 **characterised in that** in order to identify whether the motor vehicle is at a standstill it is additionally determined whether after the ignition is switched off and/or the ignition key removed one of the vehicle doors, more particularly one of the front vehicle doors is opened.

6. Method according to at least one of the preceding claims **characterised in that** a stationary state of the motor vehicle is identified by switching off the engine.

7. Method according to at least one of the preceding claims **characterised in that** the motor vehicle is assumed to be at a standstill if in the case of a motor vehicle with passive-entry/passive-go system the identification transmitter is removed from the vehicle.

8. Method according to at least one of the preceding claims **characterised in that** the motor vehicle is assumed to be at a standstill if a passenger identification system or a seat occupancy identification system detects a vehicle occupant, more particularly the driver or front-seat passenger, as getting out of the vehicle and/or opening the seat belt.

9. Method according to at least one of the preceding claims, **characterised in that** the motor vehicle is assumed to be at standstill if one of the doors of the vehicle is opened.

10. Method according to at least one of the preceding claims **characterised in that** the vehicle is assumed to be at a standstill if when the engine is running the brake pedal is actuated and/or no gear is engaged.

11. Method according to at least one of the preceding claims **characterised in that** the motor vehicle is assumed to be at a standstill so long as a certain engine-speed threshold is not reached whilst the engine is running and a gear is engaged.

12. Method according to at least one of the preceding claims, **characterised in that** the motor vehicle is assumed to be at a standstill if a remote control is actuated to close the aggregate or lock the vehicle doors and/or automatic events take place when the ignition is switched off, e.g. governed by a rain sensor.

13. Method according to claim 12 **characterised in that** when the aggregate (2) or vehicle doors are closed through remote control or in the case of automatic events with the ignition switched off the maximum sensitivity of the anti-jamming system is set.

14. Method according to at least one of the preceding claims **characterised in that** the limit value of the adjustment force correlating with the maximum permissible jamming force is additionally set or adaptively adjusted in dependence on the adjustment position of the aggregate (5).

15. Arrangement for carrying out the method according to claim 1 with an electrically operated aggregate (2) of a motor vehicle and an indirectly identifying anti-jamming protection system whose control and regulating electronics unit (5) evaluates a correlation variable for the adjustment force of the aggregate (2), wherein the control and regulating electronics unit (5) sets a limit value of the adjustment force correlating with a maximum permissible jamming force and in the event of this limit force being exceeded sends control commands to the drive unit (4) of the aggregate (2) to reverse or switch off a drive movement, and wherein the control and regulating electronics until (5) is associated with means (9) for signalling a standstill of the vehicle
**characterised in that**
the anti-jamming system has a filter (8), in particular a rough road filter, which undertakes a time based filtering of the correlation variable for the adjustment force of the aggregate (2), and the control and regulating electronics deactivates the filter when the vehicle is at a standstill.

16. Arrangement according to claim 15 **characterised in that** the control and regulating electronics unit (5) lowers the limit value of the adjustment force when the motor vehicle is at a standstill.

17. Arrangement according to claim 15 to 16 **characterised in that** the means (9) for determining the stationary state of the motor vehicle identifies the state of the ignition of the vehicle and/or the presence of the ignition key in the ignition lock.

18. Arrangement according to at least one of claims 15 to 17 **characterised in that** the means (9) for determining the stationary state of the motor vehicle identify the closing state of at least one vehicle door.

19. Arrangement according to at least one of claims 15 to 18 **characterised in that** the means (9) for determining the stationary state of the motor vehicle identify the engine state, more particularly the engine speed.

20. Arrangement according to at least one of claims 15 to 20 **characterised in that** the means (9) for determining the stationary state of the motor vehicle identify signals of the identification transmitter of a passive-entry/passive-go system.

21. Arrangement according to at least one of claims 15 to 20 **characterised in that** the means (9) for determining a stationary state of the motor vehicle identify at least one vehicle occupant getting out and/or opening the seat belt.

22. Arrangement according to at least one of claims 15 to 21 **characterised in that** the means (9) for determining a stationary state of the motor vehicle identify actuation of the brake pedal and/or engaging a gear.

23. Arrangement according to at least one of claims 15 to 22 **characterised in that** the means (9) for determining a stationary state of the motor vehicle identify the use of remote control for closing the aggregate and/or the doors of the motor vehicle and/or activation of an automatic run of the aggregate when the ignition is switched off, e.g. controlled through a rain sensor.

24. Arrangement according to at least one of claims 15 to 23 **characterised in that** the control and regulating electronics unit (5) is connected through a serial data bus (10) to the means (9) for determining a stationary state of the motor vehicle.

25. Arrangement according to at least one of claims 15 to 24 **characterised by** a device (7) for determining a correlation variable for the adjustment force of the aggregate which is connected to the control and regulating electronics unit (5) and which determines the periodic length and/or the electric current and/or the torque of a drive motor (4) of the drive unit (3).

## Revendications

1. Procédé de commande et de régulation électrique du déplacement d'un mécanisme (2) mû électriquement d'un véhicule automobile, notamment d'un lève-vitre ou d'un toit coulissant, comportant un système de protection contre un coincement, selon lequel la grandeur de corrélation pour la force de réglage du mécanisme est mesurée et un arrêt ou une inversion d'un déplacement de réglage est réalisé pour obtenir une protection contre un coincement, dans la mesure où la force de réglage dépasse une valeur limite, qui correspond à la force de coincement maximale admissible, et selon lequel la sensibilité du système de protection contre un coincement est accrue automatiquement lorsque le véhicule automobile est à l'arrêt,
**caractérisé en ce**
**que** pour accroître la sensibilité du système de protection contre un coincement alors que le véhicule est à l'arrêt, un filtre (8), notamment un filtre prenant en compte une chaussée accidentée, qui réalise un filtrage temporel de la grandeur de corrélation pour la force de réglage du mécanisme, est désactivé.

2. Procédé selon la revendication 1, **caractérisé en ce que**, alors que le véhicule automobile est à l'arrêt, la sensibilité du système de protection contre un coincement est réglée sur une valeur maximale.

3. Procédé selon la revendication 1 ou 2, **caractérisé en ce que** pour accroître la sensibilité du système de protection contre un coincement alors que le véhicule automobile est à l'arrêt, la valeur limite de la force de réglage est réduite de façon automatique de sorte que la sensibilité du système de protection contre un coincement est accrue.

4. Procédé selon au moins l'une des revendications précédentes, **caractérisé en ce que** l'arrêt du véhicule automobile est détecté sur la base du fait que l'allumage est débranché et/ou que la clé de contact est retirée.

5. Procédé selon la revendication 4, **caractérisé en ce que** pour la détermination d'un arrêt du véhicule automobile, on détecte en outre le fait qu'après le débranchement de l'allumage et/ou le retrait de la clé de contact, l'une des portières du véhicule, notamment l'une des portières avant du véhicule, est ouverte ou non.

6. Procédé selon au moins l'une des revendications précédentes, **caractérisé en ce qu'**un état d'arrêt du véhicule automobile est détecté sur la base d'un arrêt du moteur.

7. Procédé selon au moins l'une des revendications précédentes, **caractérisé en ce qu'**un état d'arrêt du véhicule automobile est supposé lorsque, dans le cas d'un véhicule automobile comportant un système passive-entry / passive-go, le générateur d'identification est éloigné du véhicule.

8. Procédé selon au moins l'une des revendications précédentes, **caractérisé en ce qu'**un état d'arrêt du véhicule est supposé lorsqu'un système d'identification de passagers ou un système d'identification d'occupation de siège identifient la montée et/ou l'ouverture de la ceinture de sécurité de l'un des passagers du véhicule, notamment du conducteur ou du passager avant.

9. Procédé selon au moins l'une des revendications précédentes, **caractérisé en ce qu'**un état d'arrêt du véhicule automobile est supposé lorsque l'une des portières du véhicule automobile est ouverte.

10. Procédé selon au moins l'une des revendications précédentes, **caractérisé en ce qu'**un état d'arrêt du véhicule automobile est supposé lorsque, alors que le moteur tourne, la pédale de frein est actionnée et/ou aucune vitesse n'est engagée.

11. Procédé selon au moins l'une des revendications précédentes, **caractérisé en ce qu'**un état d'arrêt du véhicule automobile est supposé tant que, alors que le moteur tourne et qu'une vitesse est engagée, la vitesse de rotation du moteur est inférieure à un seuil déterminé.

12. Procédé selon au moins l'une des revendications précédentes, **caractérisé en ce qu'**un état d'arrêt du véhicule automobile est supposé lorsqu'une télécommande pour la fermeture du mécanisme ou la fermeture des portières du véhicule est actionnée et/ou que des cycles automatiques sont exécutés, par exemple sont commandés par un détecteur de pluie, alors que l'allumage est débranché.

13. Procédé selon au moins la revendication 12, **caractérisé en ce que** lors de la fermeture du mécanisme (2) ou des portières du véhicule par l'intermédiaire d'une télécommande ou dans le cas de cycles automatiques alors que l'allumage est débranché, la sensibilité maximale du système de protection contre un coincement est réglée.

14. Procédé selon au moins l'une des revendications précédentes, **caractérisé en ce que** la valeur limite de la force de réglage, qui est corrélée à la force maximale admissible de coincement, est réglée ou est ajustée d'une manière adaptative en supplément en fonction de la position de réglage du mécanisme (5).

15. Dispositif pour la mise en oeuvre du procédé selon la revendication 1, comportant un mécanisme (2) mû électriquement d'un véhicule automobile et un système de protection contre un coincement, réalisant une identification indirecte et dont le système électronique de commande et de régulation (5) évalue une grandeur de corrélation pour la force de réglage du mécanisme (2), et dans lequel le système électronique de commande et de régulation (5) règle une valeur limite de la force de réglage, qui est corrélée à une force maximale admissible de coincement, et, dans le cas d'un dépassement de cette valeur limite, envoie des instructions de commande à l'unité d'entraînement (4) du mécanisme (2) pour inverser ou arrêter un déplacement d'entraînement, et dans lequel le système électronique de commande et de régulation (5) est relié à des moyens (9) servant à déterminer un état d'arrêt du véhicule automobile,
**caractérisé en ce que** le système de protection contre un coincement comporte un filtre (8), notamment un filtre prenant en compte une chaussée accidentée, pour filtrer dans le temps la grandeur de corrélation pour la force de réglage du mécanisme (2), et que le système électronique de commande et de régulation (5) désactive le filtre (8) dans le cas où le véhicule automobile est à l'arrêt.

16. Dispositif selon la revendication 15, **caractérisé en ce que** le système de commande et de régulation électronique (5) réduit la valeur limite de la force de réglage lorsque le véhicule automobile est à l'arrêt.

17. Dispositif selon la revendication 15 ou 16, **caractérisé en ce que** les moyens (9) de détermination d'un état d'arrêt du véhicule automobile identifient l'état d'allumage du véhicule automobile et/ou la présence de la clé de contact dans la serrure de contact.

18. Dispositif selon au moins l'une des revendications 15 à 17, **caractérisé en ce que** les moyens (9) de détermination d'un état d'arrêt du véhicule automobile identifient l'état de fermeture d'au moins une portière du véhicule.

19. Dispositif selon au moins l'une des revendications 15 à 18, **caractérisé en ce que** les moyens (9) de détermination d'un état d'arrêt du véhicule automobile détectent l'état du moteur, notamment la vitesse de rotation du moteur.

20. Dispositif selon au moins l'une des revendications 15 à 19, **caractérisé en ce que** les moyens (9) de détermination d'un état d'arrêt du véhicule automobile identifient les signaux du générateur d'identification d'un système passive-entry / passive-go.

21. Dispositif selon au moins l'une des revendications 15 à 20, **caractérisé en ce que** les moyens (9) de détermination d'un état d'arrêt du véhicule automobile identifient la descente et/ou l'ouverture de la ceinture de sécurité d'au moins l'un des passagers du véhicule.

22. Dispositif selon au moins l'une des revendications 15 à 21, **caractérisé en ce que** les moyens (9) de détermination d'un état d'arrêt du véhicule automobile identifient un actionnement de la pédale de frein et/ou l'engagement d'une vitesse.

23. Dispositif selon au moins l'une des revendications 15 à 22, **caractérisé en ce que** les moyens (9) de détermination d'un état d'arrêt du véhicule automobile détectent l'action d'une télécommande pour la fermeture du mécanisme et/ou des portières du véhicule automobile et/ou une activation d'un cycle automatique du mécanisme lorsque l'allumage est débranché, par exemple d'une manière commandée par le détecteur de pluie.

24. Dispositif selon au moins l'une des revendications 15 à 23, **caractérisé en ce que** le système électronique de commande et de régulation (5) est relié par l'intermédiaire d'un bus de données en série (10) aux moyens (9) de détermination d'un état d'arrêt du véhicule automobile.

25. Dispositif selon au moins l'une des revendications 15 à 24, **caractérisé par** un dispositif (7) pour détecter une grandeur de corrélation pour la force de réglage du mécanisme, et qui est relié au système électronique de commande et de régulation électronique (5) et qui détecte la durée de la période et/ou le courant électrique et/ou le couple d'un moteur d'entraînement (4) de l'unité d'entraînement (3).
